Europäisches Patentamt

European Patent Office

Office européen des brevets

(19)

(11) **EP 1 219 030 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.⁷: **H03K 17/95**, G01V 3/10

(86) Internationale Anmeldenummer:
**PCT/CH00/00516**

(21) Anmeldenummer: **00960270.7**

(22) Anmeldetag: **25.09.2000**

(87) Internationale Veröffentlichungsnummer:
**WO 01/026228 (12.04.2001 Gazette 2001/15)**

(54) **NÄHERUNGSSENSOR UND VERFAHREN ZU SEINEM BETRIEB**

PROXIMITY SENSOR AND A METHOD FOR OPERATING SAME

CAPTEUR DE PROXIMITE ET PROCEDE PERMETTANT DE FAIRE FONCTIONNER LEDIT CAPTEUR

(84) Benannte Vertragsstaaten:
**AT BE CH CY DE DK ES FI FR GB GR IE IT LI LU MC NL PT SE**

(30) Priorität: **01.10.1999 DE 19947380**

(43) Veröffentlichungstag der Anmeldung:
**03.07.2002 Patentblatt 2002/27**

(73) Patentinhaber: **ABB RESEARCH LTD.**
**8050 Zürich (CH)**

(72) Erfinder:
• **HAFFNER, Ken**
  **CH-5400 Baden (CH)**
• **PRETRE, Philippe**
  **CH-5405 Baden (CH)**

• **FRITZ, Oliver**
  **CH-5400 Baden (CH)**

(74) Vertreter: **Miller, Toivo et al**
**ABB Patent GmbH,**
**Wallstadter Strasse 59**
**68526 Ladenburg (DE)**

(56) Entgegenhaltungen:
**EP-A- 0 316 914       WO-A-99/04691**
**WO-A-99/05476       DE-U- 9 412 765**
**US-A- 5 519 317**

• **MORRIS H M: "PROXIMITY SENSOR MAKERS KEEP ON INNOVATING" CONTROL ENGINEERING,US,CONTROL ENGINEERING. NEW YORK, Bd. 40, Nr. 13, 1. Dezember 1993 (1993-12-01), Seiten 43-45, XP000424467**

**Beschreibung**

TECHNISCHES GEBIET

Die vorliegende Erfindung betrifft ein Verfahren zum Betrieb eines Näherungssensor gemäss dem Oberbegriff des Patentanspruchs 1 sowie einen Näherungssensor gemäss dem Oberbegriff des Patentanspruchs 9.

STAND DER TECHNIK

Bekannte Näherungssensoren enthalten einen Schwingkreis mit einem Kondensator und einer Spule, dessen Impedanz sich durch Annähern eines metallischen Auslösers oder Targets ändert. Bei einem induktiven Näherungssensor wird durch den Auslöser die Induktivität der Schwingkreisspule beeinflusst, bei einem kapazitiven Näherungssensor hingegen die Kapazität des Schwingkreiskondensators. Durch die Änderung der Impedanz des Schwingkreises ändert die Amplitude des Schwingkreissignals. Dieses Signal wird gleichgerichtet und im Falle eines Näherungsschalters durch einen Diskriminator in ein die An- oder Abwesenheit des Auslösers anzeigendes Signal gewandelt.

Die Schwingkreisamplitude hängt von der Schwingkreisfrequenz, von der Position des Auslösers, d.h. seinem Abstand zum Sensor, und dem Auslösermaterial ab. Bei unterschiedlichen Auslösern wird der Diskriminator im Allgemeinen bei unterschiedlichen Schaltdistanzen, d.h. bei unterschiedlichem Abstand zwischen Auslöser und Sensor, ansprechen. Deshalb sind handelsübliche Näherungsschalter auslösermaterialspezifisch und es werden Reduktionsfaktoren in der Schaltdistanz definiert. So beträgt bei induktiven Näherungsschaltern die Schaltdistanz für ein Kupfertarget hauptsächlich aufgrund der unterschiedlichen magnetischen Eigenschaften nur 30% der Schaltdistanz von Werkzeugstahl.

In der EP 0 288 921 A2 ist ein induktiver Näherungsschalter offenbart, welcher für zwei verschiedene Auslösermaterialien bei derselben Schaltdistanz anspricht. Dabei wird nur zwischen Nichteisen-Metallen wie Kupfer oder Aluminium und ferromagnetischen Eisen-Metallen differenziert. Es wird ausgenutzt, dass für einen gewünschten Schaltabstand die Impedanz/ Frequenz-Kennlinien für die beiden Auslösertypen sich in einem Punkt schneiden. Dieser bestimmt somit die Schwingkreisfrequenz und die kritische, vom Diskriminator zu detektierende Schwingkreisimpedanz. Die Auslöserunabhängigkeit ist jedoch bloss für den vorgesehenen Schaltabstand gewährleistet.

Im Gebrauchsmuster DE 94 12 765 U ist ein induktiver Näherungssensor beschrieben, bei welchem aus einer Schwingkreisgrösse und der gemessenen Resonanzfrequenz durch Differenzbildung eine im Wesentlichen auslösermaterialunabhängige Grösse gewonnen wird.

DARSTELLUNG DER ERFINDUNG

Aufgabe der vorliegenden Erfindung ist es, ein Verfahren zum Betrieb eines Näherungssensors sowie einen Näherungssensor anzugeben, der vom Material eines Auslösers unabhängig ist. Diese Aufgabe wird durch ein Verfahren zum Betrieb eines Näherungssensors mit den Merkmalen des Patentanspruchs 1 sowie einen Näherungssensor mit den Merkmalen des Patentanspruchs 9 gelöst.

Kern der Erfindung ist es, von einer komplexen Systemgrösse, welche von der Position und dem Material des Auslösers abhängt, eine auslösermaterialunabhängige Komponente abzuspalten. Der entsprechenden Projektion in einer komplexen Zahlenebene liegt die Erkenntnis zugrunde, dass die Materialabhängigkeit der komplexen Systemgrösse durch für verschiedene Auslöserpositionen parallele Geraden angenähert werden kann.

Als Systemgrössen kommen beispielsweise die Impedanz $\tilde{\mathcal{Z}}_1$ eines zum Näherungssensor gehörigen Schwingkreises, die Impedanz $\mathcal{Z}_S$ einer Schwingkreisspule, die Amplitude $\mathcal{U}_1$ des Schwingkreissignals oder ein Spannungsteilerverhältnis $\tilde{\mathcal{Z}}$ zwischen dem Schwingkreis und einem Seriewiderstand in Frage.

Gemäss einer bevorzugten Ausführungsform der Erfindung wird die genannte Projektionsrichtung numerisch oder experimentell bestimmt, indem nacheinander unterschiedliche Auslöser in dieselbe Position relativ zum Näherungssensor gebracht werden, für jeden Auslöser die gewählte Systemgrösse bestimmt wird und die dergestalt ermittelten Systemgrössewerte linear interpoliert werden.

Gemäss einer weiteren bevorzugten Ausführungsform ist zur Verminderung des Einflusses von Temperaturschwankungen auf die Systemgrösse ein zweiter Schwingkreis als Vergleichsreferenz vorgesehen.

Weitere vorteilhafte Ausführungsformen gehen aus den abhängigen Patentansprüchen hervor.

Ein Vorteil der Erfindung liegt darin, dass ein kontinuierliches, ausschliesslich von der Auslöserposition abhängiges Signal erhalten wird. Bei einer Verwendung als Näherungsschalter kann somit der Schaltabstand beziehungsweise die Diskriminatorschwelle beliebig gewählt werden.

KURZE BESCHREIBUNG DER FIGUREN

Nachfolgend wird die Erfindung anhand von Ausführungsbeispielen im Zusammenhang mit den Zeichnungen näher erläutert. Es zeigen

Fig.1 ein Prinzipschaltbild eines Näherungssensors,

Fig.2 die komplexe Impedanz $\mathscr{L}_s$ einer Sensorspule eines Näherungssensors in Abhängigkeit von Auslöserabstand und Auslösermaterial,

Fig.3 das komplexe Spannungsteilerverhältnis $\breve{\mathscr{L}}$ eines Näherungssensors in Abhängigkeit von Auslöserabstand und Auslösermaterial,

Fig.4 ein Prinzipschaltbild eines Näherungssensors mit angeschlossener Auswerteschaltung, und

Fig.5 ein Prinzipschaltbild eines Näherungssensors mit einem Referenzschwingkreis.

Die in den Zeichnungen verwendeten Bezugszeichen sind in der Bezugszeichenliste zusammengefasst. Grundsätzlich sind gleiche Teile mit denselben Bezugszeichen versehen.

WEGE ZUR AUSFÜHRUNG DER ERFINDUNG

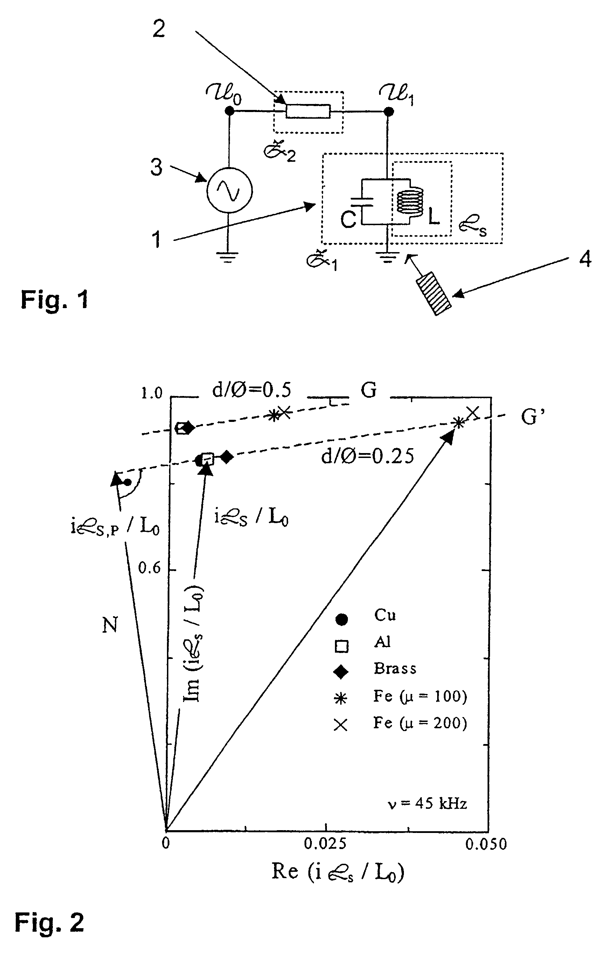

In Fig.1 sind die Grundkomponenten eines Näherungssensors dargestellt. Ein Schwingkreis 1 mit einem Kondensator C und einer Spule L wird von einem Frequenzgeber 3 in Schwingung versetzt. Ein Seriewiderstand 2 mit der Impedanz $\breve{\mathscr{L}}_2$ ist mit dem Schwingkreis 1 in Reihe geschaltet. Die komplexen Impedanzen des Schwingkreises 1 und der Spule L sind mit $\breve{\mathscr{L}}_1$ und $\mathscr{L}_s$ bezeichnet. Die komplexe Amplitude des Spannungabfalls über dem Schwingkreis 1 ist $\mathscr{U}_1$ , über Schwingkreis und Seriewiderstand $\mathscr{U}_0$. Durch Annähern eines Auslösers 4 ändert sich die Impedanz der Spule L oder des Kondensators C, und damit auch die Impedanz $\breve{\mathscr{L}}_1$ des Schwingkreises 1 sowie die Spannung $\mathscr{U}_1$ .

Die weitere Beschreibung bezieht sich auf einen Näherungssensor induktiver Art, bei welchem die Spule L als Sensor ausgebildet ist. In Fig.2 ist die mit der Luftspulenimpedanz $L_0$ (bei Abwesenheit des Auslösers) normierte Spulenimpedanz $\mathscr{L}_s$ für unterschiedliche Auslöser und Auslöserpositionen dargestellt. Letztere sind durch das Verhältnis d/Ø von Auslöserabstand d zu Spulendurchmesser Ø parametrisiert. Der Sensorspulendurchmesser handelsüblicher Näherungssensoren beträgt einige mm bis wenige cm, damit lassen sich Auslöserabstände d in der gleichen Grössenordnung erkennen. Die Auslöser 4 unterscheiden sich durch ihre elektrische Leitfähigkeit σ und ihre magnetische Permeabilität μ.

Aus der Darstellung in Fig.2 ist ersichtlich, dass für einen festen Auslöserabstand d die Spulenimpedanz $\mathscr{L}_s$ von den Materialeigenschaften und damit auch von der Temperatur T des Auslösers abhängt. Diese Abhängigkeit kann durch zumindest annäherungsweise parallele Geraden G, G' angenähert werden. Entsprechend ist die Projektion $\mathscr{L}_{s,p}$ der Spulenimpedanz $\mathscr{L}_s$ auf eine Normale N, welche senkrecht steht zu den Geraden G, G', vom Auslösermaterial unabhängig. Die Komponente $\mathscr{L}_{s,p}$ in Richtung N der Grösse $\mathscr{L}_s$ erlaubt also eine materialinsensitive Bestimmung des Auslöserabstandes d.

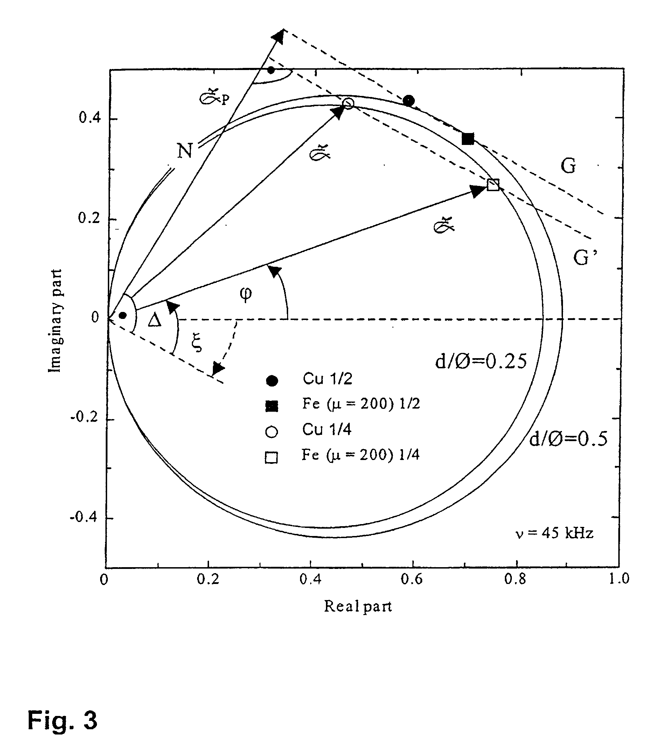

In Fig.3 ist eine andere den Zustand des Näherungssensors charakterisierende Systemgrösse dargestellt, nämlich das komplexe Spannungsteilerverhältnis

$$\breve{\mathscr{L}}=\breve{\mathscr{L}}_1/(\breve{\mathscr{L}}_1+\breve{\mathscr{L}}_2)=\mathscr{U}_1/\mathscr{U}_0.$$

Wiederum kann die Materialabhängigkeit von $\breve{\mathscr{L}}$ durch parallele Geraden G, G' angenähert werden. Die Richtung der Geraden G, G' und damit die Projektionsrichtung auf die Normale N ist durch den Winkel ξ parametrisiert. Die materialunabhängige Komponente von $\breve{\mathscr{L}}$ parallel zu N ist mit $\breve{\mathscr{L}}_p$ bezeichnet. Der Winkel φ entspricht der Phasendifferenz zwischen $\mathscr{U}_0$ und $\mathscr{U}_1$ . Die beiden Kreise in Fig.3 geben die Abhängigkeit der Systemgrösse $\breve{\mathscr{L}}$ von der Schwingkreisfrequenz ν für einen jeweils festen Auslöserabstand d wieder. Die gestrichelt gezeichnete Horizontale, auf welche sich in der vorliegenden Darstellung die Winkel ξ und φ beziehen, entspricht dabei der Resonanzfrequenz des Schwingkreises.

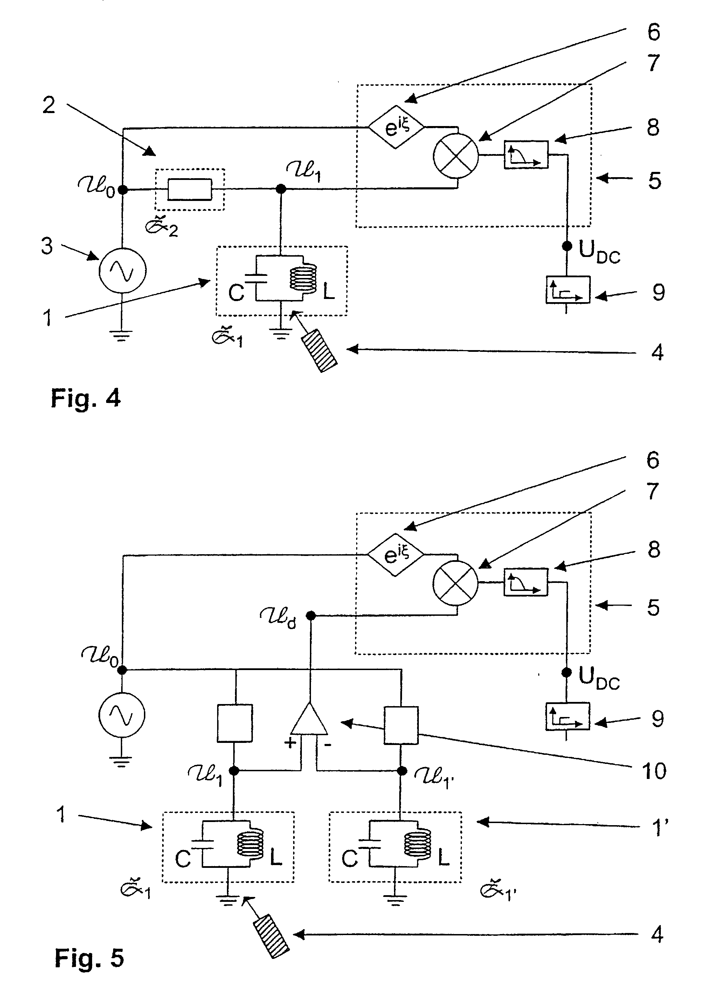

Es können selbstverständlich noch weitere stationäre komplexe Systemgrössen, wie beispielsweise die Schwingkreisimpedanz $\breve{\mathscr{L}}_1$, ausgewertet werden. Aber auch Differenzen zwischen einer auslöserempfindlichen Systemgrösse und einer Referenzgrösse (siehe Fig.5 weiter unten) können einer Schwingkreisanalyse zugeführt werden. Das erfindungsgemässe Vorgehen zur Bestimmung einer auslösermaterialunabhängigen Komponente lässt sich auf beliebige Systemgrössen anwenden und umfasst in der Praxis die folgenden Schritte. Für eine feste Schwingkreisfrequenz $\nu$ und einen beliebigen Abstand d wird die Systemgrösse für mindestens zwei unterschiedliche Auslöser bestimmt. Dabei sind zur allfälligen Impedanzbestimmung Stromund Spannungsmessungen vonnöten. Die entsprechenden Systemgrössen-Werte werden in einer Darstellung entsprechend Fig.3 aufgetragen und durch eine Gerade G angenähert, woraus sich der schwingkreisfrequenzabhängige Winkel $\xi$ ermitteln lässt. Beim Einsatz des Näherungssensors wird die Systemgrösse laufend aktualisiert und ihre Projektion auf die durch den Winkel $\xi$ festgelegte Richtung N zur Bestimmung des Auslöserabstandes d ausgewertet.

Sowohl die Bestimmung von $\xi$ als auch der Projektionsprozess im Betrieb des Näherungssensors können unter Einsatz von mehreren Analog-Digital-Wandlern einem Mikroprozessor übertragen werden. Andererseits kann die Projektion gemäss Fig.3 durch eine rein analoge, in Fig.4 dargestellte Schaltung messtechnisch realisiert werden. Einer Auswerteschaltung 5 werden die periodischen Spannungen $U_0(t)$ und $U_1(t)$ sowie der Winkel $\xi$ zugeführt. Ein Phasenschieber 6 verschiebt die Phase von $U_0(t)$ um den Phasenwinkel $\xi+\pi/2$. Anschliessend werden die Signale in einem Multiplikator 7 multipliziert und einem Tiefpassfilter 8 gefiltert. Es wird ein Gleichstromsignal $U_{DC}$ erhalten, welches proportional zum Betrag $|\tilde{\mathscr{S}}_P|$ der gesuchten Projektion $\tilde{\mathscr{S}}_P$ ist. Alle diese Funktionen können von einem Lock-In Verstärker ausgeführt werden. Bei einem Näherungsschalter wird das Signal $U_{DC}$ weiter einem Diskriminator 9 zugeführt. Dieser wandelt das Signal in Abhängigkeit einer einem bestimmten Schaltabstand zugeordneten Diskriminatorschwelle in ein die Zustände "Auslöser anwesend" und "Auslöser abwesend" repräsentierendes binäres Signal um.

Die Funktionsweise der Auswerteschaltung (5) lässt sich durch die folgende Analyse nachvollziehen. Mit

$$U_0(t) = \mathrm{Re}\,(\mathcal{U}_0 \cdot e^{i\omega t}) = U_0 \cdot \cos(\omega t)$$

und

$$U_1(t) = \mathrm{Re}\,(\mathcal{U}_1 \cdot e^{i\omega t}) = \mathrm{Re}\,(\mathcal{U}_0 \cdot \tilde{\mathscr{S}} \cdot e^{i\omega t}) = \mathrm{Re}\,(\mathcal{U}_0 \cdot e^{i\omega t} \cdot |\tilde{\mathscr{S}}| \cdot e^{i\varphi})$$

wird das Signal am Ausgang des Multiplikators 7 zu

$$U_0{}^2 |\tilde{\mathscr{S}}| \cos(\omega t + \xi + \pi/2) \cdot \cos(\omega t + \varphi) = \frac{1}{2} U_0{}^2 |\tilde{\mathscr{S}}| \big[\cos(2\omega t + \varphi + \xi + \pi/2) + \cos(\varphi - \xi - \pi/2)\big]$$

Nach passieren des Tiefpassfilters 8 bleibt nur ein zur gesuchten Komponente $\tilde{\mathscr{S}}_P$ proportionaler Gleichstromterm $U_{DC}$ übrig, d.h. (mit $\Delta = \varphi - \xi$.):

$$U_{DC} = \frac{1}{2} U_0{}^2 |\tilde{\mathscr{S}}| \cdot \cos(\Delta - \pi/2) = \frac{1}{2} U_0{}^2 \cdot |\tilde{\mathscr{S}}| \cdot \sin(\Delta) = \frac{1}{2} U_0{}^2 \cdot |\tilde{\mathscr{S}}_P|$$

Falls der Näherungssensor in einer Umgebung eingesetzt werden soll, in welcher die Temperatur des Sensors stark variiert und dadurch die Impedanz $\tilde{\mathscr{S}}_1$ des Schwingkreises 1 beeinflusst wird, bietet sich eine Brückenschaltung zur Verbesserung der Temperaturunabhängigkeit des Näherungssensors an. In Fig.5 sind ein Schwingkreis 1 und ein identischer Referenzschwingkreis 1 zu diesem Zweck in geringem Abstand angeordnet, derart, dass beide dieselbe Temperatur aufweisen, aber nur der eine Schwingkreis 1 durch den Auslöser 4 beeinflusst wird. Bei der Ausführung nach Fig.5 erzeugt ein Dirferenzbildner 10 das Differenzsignal $\mathcal{U}_d$ der Schwingkreisamplitude $\mathcal{U}_1$ und der auslöserunabhängigen Referenzschwingkreisamplitude $\mathcal{U}_{1'}$. Diese Lösung ist jedoch platz- und kostenintensiv.

Wie aus den Fig.2 und 3 ersichtlich ist, bildet die magnetische Permeabilität $\mu$ die dominante Materialeigenschaft bei der Unterscheidung der Auslösermaterialien. Die Leitfähigkeit $\sigma$, welche beispielsweise die nichtmagnetischen Metalle Kupfer (Cu), Aluminium (Al) und Messing (Brass) unterscheidet, beeinflusst Phase und Absolutwert der zu bestimmenden Systemgrösse in einem geringeren Masse. Die vom Auslösermaterial beziehungsweise von der Auslöserleitfähigkeit abhängige Komponente wird mittels einer entsprechenden Projektion auf die Geraden G erhalten. Diese Komponente kann bei einem festen Auslöserabstand d zu einem Leitfähigkeitsvergleich und, bei bekannter Temperaturabhängigkeit der Leitfähigkeit $\sigma(T)$ des Auslösers, sogar zu einer Messung der Auslösertemperatur T herangezogen werden. Eine derartige Leitfähigkeits- oder Temperaturmessung ist im Weiteren bei Schwingkreisfrequenzen, welche deutlich höher sind als die in Fig.2 und 3 gewählte, von einer Variation des Auslöserabstandes d praktisch entkoppelt.

Durch die erfindungsgemässe Auswahl einer Komponente einer Systemgrösse, welche vom Auslösermaterial unabhängig ist, kann bei einem Näherungssensor der Auslöser 4 beliebig ausgetauscht werden, ohne dass irgendwelche Nachregelungen vonnöten wären. Die vorgeschlagene Projektion führt zu einem auslöserabstandsabhängigen nichtperiodischen Signal $U_{DC}(d)$, welches auch zur Detektierung eine relativen Abstandsänderung geeignet ist.

BEZUGSZEICHENLISTE

| | |
|---|---|
| 1 | Schwingkreis |
| 1' | Referenzschwingkreis |
| 2 | Seriewiderstand |
| 3 | Frequenzgeber |
| 4 | Auslöser (Target) |
| 5 | Auswerteschaltung |
| 6 | Phasenschieber |
| 7 | Multiplikator |
| 8 | Tiefpassfilter |
| 9 | Diskriminator |
| 10 | Differenzbilder |
| C | Schwingkreiskondensator |
| L | Schwingkreisspule |
| $\mathcal{Z}_s$ | Impedanz der Schwingkreisspule |
| $\mathcal{Z}_1$ | Impedanz des Schwingkreises 1 |
| $\mathcal{Z}_2$ | Impedanz des Seriewiderstandes 2 |
| $\mathcal{Z}$ | Spannungsteilerverhältnis |
| $\mathcal{U}_0$ | Amplitude der Spannung des Frequenzgebers |
| $\mathcal{U}_1$ | Amplitude der Schwingkreisspannung |
| $U_{DC}$ | Gleichstromsignal |

**Patentansprüche**

1. Verfahren zum Betrieb eines mit einem Auslöser (4) zusammenwirkenden Näherungssensors, welcher einen Schwingkreis (1) und einen Frequenzgeber (3) aufweist, wobei von einer von der Position und dem Material des Auslösers (4) abhängigen komplexen Systemgrösse ($\mathcal{Z}_s, \mathcal{Z}_1, \mathcal{Z}$) eine auslösermaterialunabhängige Komponente ($\mathcal{Z}_{s,P}, \mathcal{Z}_{1,P}, \mathcal{Z}_P$) bestimmt wird,
   **dadurch gekennzeichnet, dass** die Bestimmung der auslösermaterialunabhängigen Systemgrössenkomponente ($\mathcal{Z}_{s,P}, \mathcal{Z}_{1,P}, \mathcal{Z}_P$) in einer komplexen Zahlenebene durch eine Projektion der Systemgrösse ($\mathcal{Z}_s, \mathcal{Z}_1, \mathcal{Z}$) auf eine Richtung (N) erfolgt, welche senkrecht steht zu einer die Materialabhängigkeit der Systemgrösse ($\mathcal{Z}_s, \mathcal{Z}_1, \mathcal{Z}$) approximierenden Geraden (G).

2. Verfahren nach Anspruch 1, **dadurch gekennzeichnet, dass** die Gerade (G) eine lineare Interpolation durch mindestens zwei, für eine beliebige Position des Auslösers (4) und unterschiedliche Auslösermaterialien ermittelte Systemgrössenwerte ist.

3. Verfahren nach Anspruch 1 oder 2, **dadurch gekennzeichnet, dass** der Näherungssensor ein induktiver Näherungssensor ist und die Systemgrösse ($\mathcal{Z}_s, \mathcal{Z}_1, \mathcal{Z}$) die Impedanz ($\mathcal{Z}_s$) der Sensorspule (L) ist.

4. Verfahren nach Anspruch 1 oder 2, **dadurch gekennzeichnet, dass** die Systemgrösse ($\mathcal{Z}_s, \mathcal{Z}_1, \mathcal{Z}$) die Schwingkreisimpedanz ($\mathcal{Z}_1$), die Schwingkreisamplitude ($\mathcal{U}_1$) oder das Spannungsteilerverhältnis $\mathcal{Z}$ zwischen dem Schwingkreis (1) und einem Serienwiderstand (2) ist.

5. Verfahren nach Anspruch 1 oder 2, **dadurch gekennzeichnet, dass** die Systemgrösse eine Differenz ($\mathcal{U}_d$) zwischen der Schwingkreisamplitude ($\mathcal{U}_1$) oder der Schwingkreisimpedanz ($\mathcal{Z}_1$) und einer auslöserunabhängigen Referenzamplitude ($\mathcal{U}_{1'}$) oder Referenzimpedanz ($\mathcal{Z}_{1'}$) ist.

**6.** Verfahren nach Anspruch 5, **dadurch gekennzeichnet, dass** ein zum Schwingkreis (1) identischer Referenz-schwingkreis (1') die Referenzamplitude ($\mathcal{U}_1$,) oder die Referenzimpedanz ($\breve{Z}_1$,) liefert.

**7.** Verfahren nach Anspruch 2, **dadurch gekennzeichnet, dass** ein von der Position und dem Material des Auslösers (4) abhängiges periodisches Signal ($U_1(t)$, $U_d(t)$), das periodische Signal ($U_o(t)$) des Frequenzgebers (3) und ein Phasenwinkel ($\xi$) durch eine Auswerteschaltung (5) in ein Gleichstromsignal ($U_{DC}$) gewandelt werden.

**8.** Näherungssensor zur Zusammenwirkung mit einem Auslöser (4), mit einem Schwingkreis (1), einem Frequenzgeber (3) und einer Auswerteschaltung (5) zur Bestimmung einer auslösermaterialunabhängigen Komponente ($\mathcal{L}_{s,P}$, $\breve{Z}_{1,P}$, $\breve{Z}_P$) einer von der Position und dem Material des Auslösers (4) abhängigen komplexen System-grösse ($\mathcal{L}_s$, $\breve{Z}_1$, $\breve{Z}$),
**dadurch gekennzeichnet, dass** Mittel zur Projektion der Systemgrösse ($\mathcal{L}_s$, $\breve{Z}_1$, $\breve{Z}$) in einer komplexen Zah-lenebene auf eine Richtung (N), welche senkrecht steht zu einer die Materialabhängigkeit der Systemgrösse ($\mathcal{L}_s$, $\breve{Z}_1$, $\breve{Z}$) approximierenden Geraden (G), vorhanden sind.

**9.** Näherungssensor nach Anspruch 8, **dadurch gekennzeichnet, dass** die Auswerteschaltung (5) einen Phasenschieber (6), einen Multiplikator (7) und einen Tiefpassfilter (8) aufweist.

## Claims

**1.** A method for operating a proximity sensor co-operating with a trip (4), which sensor comprises an oscillator (1) and a frequency generator (3), with a component ($\mathbf{L}_{s,P}$,$\mathbf{Z}_{1,P}$,$\mathbf{Z}_P$) which is independent of the material of the trip being determined from a complex system quantity ($\mathbf{L}_s$,$\mathbf{Z}_1$,$\mathbf{Z}$) which is dependent upon the position and the material of the trip (4), **characterized in that** the determination of the system quantity component ($\mathbf{L}_{s,P}$,$\mathbf{Z}_{1,P}$,$\mathbf{Z}_P$) which is independent of the material of the trip occurs in a complex number plane by a projection of the system quantity ($\mathbf{L}_s$,$\mathbf{Z}_1$,$\mathbf{Z}$) to a direction (N) which stands perpendicular to a straight line (G) approximating the material dependence of the system quantity ($\mathbf{L}_s$,$\mathbf{Z}_1$,$\mathbf{Z}$).

**2.** A method as claimed in claim 1, **characterized in that** the straight line (G) is a linear interpolation by at least two system quantity values determined for a random position of the trip (4) and different materials of the trip.

**3.** A method as claimed in claim 1 or 2, **characterized in that** the proximity sensor is an inductive proximity sensor and the system quantity ($\mathbf{L}_s$,$\mathbf{Z}_1$,$\mathbf{Z}$) is the impedance ($\mathbf{L}_s$) of the sensor coil (L).

**4.** A method as claimed in claim 1 or 2, **characterized in that** the system quantity ($\mathbf{L}_s$,$\mathbf{Z}_1$,$\mathbf{Z}$) is the oscillator impedance ($\mathbf{Z}_1$), oscillator amplitude ($\mathbf{U}_1$) or the voltage divider ratio ($\mathbf{Z}$) between the oscillator (1) and a series resistor (2).

**5.** A method as claimed in claim 1 or 2, **characterized in that** the system quantity is a difference ($\mathbf{U}_d$) between the oscillator amplitude ($\mathbf{U}_1$) or the oscillator impedance ($\mathbf{Z}_1$) and a trip-independent reference amplitude ($\mathbf{U}_{1'}$) or ref-erence impedance ($\mathbf{Z}_{1'}$).

**6.** A method as claimed in claim 5, **characterized in that** a reference oscillator (1') which is identical to the oscillator (1) supplies the reference amplitude ($\mathbf{U}_1$') or reference impedance ($\mathbf{Z}_{1'}$).

**7.** A method as claimed in claim 2, **characterized in that** a periodic signal ($U_1(t)$, $U_d(t)$) which is dependent on the position and the material of the trip (4), the periodic signal ($U_0(t)$) of the frequency generator (3) and a phase angle ($\xi$) are converted by an evaluating circuit (5) into a DC signal ($U_{DC}$).

**8.** A proximity sensor for co-operating with a trip (4), with an oscillator (1), a frequency generator (3) and an evaluating circuit (5) for determining a trip-material-independent component ($\mathbf{L}_{s,P}$,$\mathbf{Z}_{1,P}$,$\mathbf{Z}_P$) of a complex system quantity ($\mathbf{L}_s$, $\mathbf{Z}_1$,$\mathbf{Z}$) which is dependent upon the position and the material of the trip (4), **characterized in that** means are present for projecting the system quantity ($\mathbf{L}_s$,$\mathbf{Z}_1$,$\mathbf{Z}$) in a complex number plane to a direction (N) which stands perpendicular to a straight line (G) approximating the material dependence of the system quantity ($\mathbf{L}_s$,$\mathbf{Z}_1$,$\mathbf{Z}$).

**9.** A proximity sensor as claimed in claim 8, **characterized in that** the evaluating circuit (5) comprises a phase shifter (6), a multiplicator (7) and a low-pass filter (8).

**EP 1 219 030 B1**

**Revendications**

1. Procédé d'exploitation d'un capteur de proximité coopérant avec un déclencheur (4), qui présente un circuit oscillant (1) et un générateur de fréquence (3), une composante ($\mathcal{Z}_{S,P}$, $\mathcal{Z}_{1,P}$, $\mathcal{Z}_{P}$) indépendante du matériau du déclencheur étant déterminée à partir d'un paramètre système ($\mathcal{Z}_S$, $\mathcal{Z}_1$, $\mathcal{Z}$) complexe dépendant de la position et du matériau du déclencheur (4), **caractérisé en ce que** la détermination de la composante du paramètre système ($\mathcal{Z}_{S,P}$, $\mathcal{Z}_{1,P}$, $\mathcal{Z}_P$) indépendante du matériau du déclencheur complexe par une projection du paramètre système ($\mathcal{Z}_S$, $\mathcal{Z}_1$, $\mathcal{Z}$) dans un plan numérique sur une direction (N), qui est perpendiculaire à une droite (G) caractérisant de manière approchée la dépendance du paramètre système ($\mathcal{Z}_S$, $\mathcal{Z}_1$, $\mathcal{Z}$) vis-à-vis du matériau .

2. Procédé selon la revendication 1, **caractérisé en ce que** la droite (G) est une interpolation linéaire à l'aide d'au moins deux valeurs de paramètre système déteminées pour une position quelconque du déclencheur (4) et différents matériaux de déclencheur

3. Procédé selon la recendication 1 ou 2, **caractérisé en ce que** le capteur de proximité est un capteur inductif et le paramètre système ($\mathcal{Z}_S$, $\mathcal{Z}_1$, $\mathcal{Z}$) est l'impédance ($\mathcal{Z}_S$) de la bobine de capteur (L).

4. Procédé selon la recendication 1 ou 2, **caractérisé en ce que** le paramètre système ($\mathcal{Z}_S$, $\mathcal{Z}_1$, $\mathcal{Z}$) est l'impédance du circuit oscillant ($\mathcal{Z}_1$) l'amplitude d'oscillation ($\mathcal{U}_1$) ou le rapport du diviseur de tension $\mathcal{Z}$ entre le circuit oscillant (1) et une résistance série (2).

5. Procédé selon la recendication 1 ou 2, **caractérisé en ce que** le paramètre système est une différence ($\mathcal{U}_d$) entre l'amplitude du circuit oscillant ($\mathcal{U}_1$) ou l'impédance du circuit oscillant ($\mathcal{Z}_1$) et une amplitude de référence ($\mathcal{U}_{1'}$) ou une impédance de référence ($\mathcal{Z}_{1'}$) indépendante du déclencheur.

6. Procédé selon la recendication 5, **caractérisé en ce qu'**un circuit oscillant de référence (1') identique au circuit oscillant fournit l'amplitude de référence ($\mathcal{U}_{1'}$) ou l'impédance de référence ($\mathcal{Z}_{1'}$) .

7. Procédé selon la recendication 2, **caractérisé en ce qu'**un signal périodique ($U_1(t)$, $U_2(t)$) dépendant de la position et du matériau du déclencheur (4), le signal ($U_0(t)$) périodique du générateur de fréquence (3) et un angle de phase ($\zeta$) sont convertis en un signal de courant continu ($U_{DC}$) par un circuit de traitement.

8. Capteur de proximité destiné à coopérer avec un déclencheur (4), comportant un circuit oscillant (1), un générateur de fréquence (3) et un circuit de traitement pour déterminer une composante ($\mathcal{Z}_{S,P}$, $\mathcal{Z}_{1,P}$, $\mathcal{Z}_P$) indépendante du matériau du déclencheur d'un paramètre système complexe ($\mathcal{Z}_S$, $\mathcal{Z}_1$, $\mathcal{Z}$) dépendant de la position et du matériau du déclencheur (4), **caractérisé en ce que** des moyens sont prévus pour effectuer une projection du paramètre système ($\mathcal{Z}_S$, $\mathcal{Z}_1$, $\mathcal{Z}$) dans un plan numérique complexe, sur une direction (N), qui est perpendiculaire à une droite (G) représentant de manière approchée la relation de dépendance du paramètre système ($\mathcal{Z}_S$, $\mathcal{Z}_1$, $\mathcal{Z}$) vis-à-vis du matériau .

9. Capteur de proximité selon la revendication 8, **caractérisé en ce que** le circuit de traitement (5) comprend un déphaseur (6), un multiplicateur (7) et un filtre passe-bas (8).

**Fig. 1**

**Fig. 2**

Fig. 3

**Fig. 4**

**Fig. 5**